# EUROPÄISCHE PATENTANMELDUNG

(11) **EP 1 291 813 A2**
(43) Veröffentlichungstag der Anmeldung: **12.03.2003**
(21) Anmeldenummer: 02019139.1
(22) Anmeldetag: 30.08.2002
(51) Int. Cl.: G06K 15/00, G06K 15/16

(54) **Ermitteln einer Anzahl sequentiell geordneter Seiten in einem geordneten Mediensatz**

(30) Priorität: 05.09.2001 US 317607 P
(71) Anmelder: Heidelberger Druckmaschinen Aktiengesellschaft, 69115 Heidelberg (DE)
(72) Erfinder: Roztocil, Tomas, Caledonia, NY 14425 (US)
(74) Vertreter: Franzen, Peter

(57) **Zusammenfassung**

Ein Verfahren zum Ermitteln einer Anzahl sequentiell geordneter Seiten in einem Mediensatz umfasst die folgenden Verfahrensschritte: Zuordnen des geordneten Mediensatzes zu einem Eintrag in einem Papierkatalog in Reaktion auf eine Eingabe an der Benutzeroberfläche (13) und Lesen eines Bezeichners für den geordneten Mediensatz aus dem Eintrag, wobei der Bezeichner die Anzahl der sequentiell geordneten Seiten in dem geordneten Mediensatz umfasst.

## Beschreibung

Die vorliegende Erfindung betrifft ein Verfahren zum Spezifizieren einer Anzahl von sequentiell geordneten Seiten in einem geordneten Mediensatz.

Eine digitale Druckvorrichtung mit mehreren Medienquellen (z.B. Papierzufuhr) und Ausgabezielen kann in der Wahl verschiedener Ausgabeziele für die unbedruckten oder bedruckten Ausgabeseiten Einschränkungen unterliegen. Beispielsweise kann eine digitale Druckvorrichtung einem Benutzer nur die Wahl eines Ausgabeziels pro Ausgabesatz für einen Druckauftrag ermöglichen. Der Begriff Ausgabesatz bezieht sich auf eine Gruppe von Ausgabeseiten (z.B. gedruckte Ausgabeseiten), die für einen einzelnen Druckauftrag wiederholbar sind. Viele digitale Druckvorrichtungen ermöglichen einem Benutzer allgemein nicht, ein Ausgabeziel für einzelne Seiten des Ausgabesatzes zu wählen. Der Benutzer der Druckvorrichtung muss häufig auf ineffiziente, arbeitsaufwändige und langsame manuelle Sortiervorgänge zurückgreifen, um die richtige Gruppierung oder Sortierung von Papieren für einen Druckauftrag vorzunehmen, wenn eine individuelle Behandlung einer oder mehrerer Ausgabeseiten in dem Ausgabesatz erforderlich ist. Es besteht daher Bedarf an einer Druckvorrichtung, die die Auswahl verschiedener Ausgabeziele unterstützt, und zwar sogar für dieselbe Ausführung eines einzelnen Ausgabesatzes eines Druckauftrags, um Druckkosten und Durchlaufzeit zu senken.

Einige Druckvorrichtungen unterstützen Sonderfunktionen, die die Verwendung von zwei Ausgabezielen in einem einzelnen Druckauftrag ermöglichen. Diese Druckvorrichtungen benutzen normalerweise eine Druckmedienausgabe (z.B. das obere Fach) als "Entsorgungsfach". Für Druckaufträge, die auf einer derartigen Druckvorrichtung ausgeführt werden, ermittelt die Vorrichtung, ob Medien, die in eines der Papierzufuhrfächer eingelegt wurden, von einem aktuellen oder von einem zukünftigen Druckauftrag nicht benutzt werden, aber dennoch durch das System geführt werden müssen, damit der nächste Ausgabesatz nicht die falschen Medien benutzt. Die Druckvorrichtung berechnet also, wie viele unerwünschte Bogen in dem Papiereingabefach "entsorgt" werden müssen. Möglicherweise lässt die Druckvorrichtung einem Benutzer jedoch nicht die Wahl, wann zur Anpassung eines Druckauftrags an die Wünsche des Kunden eine Seite in das "Entsorgungsfach" gelenkt werden soll. Zudem unterstützen viele Druckvorrichtungen nicht das Bedrucken der Seiten, die in das "Entsorgungsfach" geleitet werden, was ebenfalls die Möglichkeit der Anpassung eines Druckauftrags an die Vorstellungen eines Benutzers eingrenzt. Es besteht daher Bedarf an einer Verbesserung der Möglichkeiten, die einem Benutzer zur Lenkung von Seiten in einer Druckvorrichtung zwecks Anpassung eines Druckauftrags zur Verfügung stehen.

Darüber hinaus können bei Verwendung geordneter Medien in einem Druckauftrag Situationen auftreten, in denen es erforderlich ist, unbenutzte Teile oder Bogen der geordneten Medien zu trennen oder zu entsorgen. Es besteht daher auch Bedarf an verbesserten Vorrichtungen und Verfahren zur Entsorgung derartiger unerwünschter Medien.

Wenn der Benutzer darüber hinaus geordnete Medien zur Verwendung in einem Druckauftrag auswählt, muss er der Druckvorrichtung mitteilen, aus wie vielen sequentiell geordneten Seiten ein geordneter Mediensatz besteht (z.B. wie viele Registerseiten einen Registermediensatz ausmachen). Daher besteht Bedarf an einem verbesserten Verfahren zum Instruieren der Druckvorrichtung über die Anzahl der Seiten in einem geordneten Mediensatz.

Der Erfindung liegt demgemäss die Aufgabe zu Grunde, ein Verfahren zum Ermitteln der Anzahl der sequentiell geordneten Seiten in einem geordneten Mediensatz zu schaffen.

Diese Aufgabe wird erfindungsgemäß durch ein Verfahren mit den Merkmalen des Anspruchs 1 gelöst sowie durch eine *Vorrichtung* nach Anspruch 2. Weitere Merkmale sind in den Unteransprüchen enthalten.

Erfindungsgemäß umfasst ein Verfahren zum Ermitteln einer Anzahl sequentiell geordneter Seiten in einem geordneten Mediensatz das Zuordnen des geordneten Mediensatzes zu einem Eintrag in einem Papierkatalog in Reaktion auf eine Eingabe an einer Benutzeroberfläche. Das Verfahren umfasst des Weiteren das Lesen eines Bezeichners für den geordneten Mediensatz aus dem Eintrag. Der Bezeichner umfasst die Anzahl der sequentiell geordneten Seiten in dem geordneten Mediensatz.

Die Erfindung wird im folgenden anhand in den Zeichnungen dargestellter Ausführungsbeispiele näher erläutert.

Es zeigen:
- Fig. 1: ein Blockdiagramm eines Dokumentproduktionssystems gemäß der vorliegenden Erfindung;
- Fig. 2: ein Diagramm einer Druckvorrichtung mit mehreren Eingabequellen und Ausgabezielen gemäß der vorliegenden Erfindung;
- Fig. 3: ein Ablaufdiagramm eines Verfahrens zur Lenkung von Seiten zu einem oder mehreren gewählten Ausgabezielen der Druckvorrichtung gemäß der vorliegenden Erfindung;
- Fig. 4: ein Beispiel verschiedener Eingabemedien mit einer sich wiederholenden Sortiersequenz gemäß der vorliegenden Erfindung;
- Fig. 5A: eine beispielhafte Darstellung eines Anzeigeschirms, der mit einer Benutzeroberfläche verbunden ist, um einen Druckauftrag gemäß der vorliegenden Erfindung anzufordern;
- Fig. 5B: eine beispielhafte Darstellung eines Anzeigeschirms zur Darstellung einer frühen Stufe einer Druckauftragsanforderung gemäß der vorliegenden Erfindung;
- Fig. 5C: eine beispielhafte Darstellung eines Anzeigeschirms zur Darstellung einer laufenden Druckauftragsanforderung nach dem in Fig. 5B dargestellten Schirm;
- Fig. 5D: eine beispielhafte Darstellung eines Anzeigeschirms zur Darstellung einer laufenden Druckauftragsanforderung nach dem in Fig. 5C dargestellten Schirm;
- Fig. 6A u. 6B: Beispiele eines Ausgabesatzes der Druckvorrichtung gemäß der vorliegenden Erfindung;
- Fig. 6C: eine Tabelle eines Medienausgabemusters für den Ausgabesatz aus Fig. 6A und Fig. 6B;
- Fig. 7A u. 7B: Beispiele eines Ausgabesatzes der Druckvorrichtung gemäß der vorliegenden Erfindung;
- Fig. 7C: eine Tabelle eines Medienausgabemusters für den Ausgabesatz aus Fig. 7A und Fig. 7B;
- Fig. 7D: eine Tabelle eines Beispiels eines nicht abgestimmten Medienausgabemusters für die Druckvorrichtung gemäß der vorliegenden Erfindung;
- Fig. 8: eine beispielhafte Darstellung eines Anzeigeschirms, der mit einer Benutzeroberfläche verbunden ist, um einen Papierkatalog gemäß der Erfindung anzuzeigen;
- Fig. 9: eine weitere beispielhafte Darstellung eines Anzeigeschirms, der mit einer Benutzeroberfläche verbunden ist, um einen Papierkatalog gemäß der vorliegenden Erfindung anzuzeigen;
- Fig. 10: ein Ablaufdiagramm für ein bevorzugtes Verfahren zum Ermitteln einer Anzahl sequentiell geordneter Seiten in einem geordneten Mediensatz gemäß der vorliegenden Erfindung.

Im vorliegenden Kontext ist unter einer Druckvorrichtung eine digitale Druckvorrichtung, eine Kopiervorrichtung oder beides zu verstehen. Die vorliegende Erfindung betrifft eine Druckvorrichtung, die mindestens eine Eingabequelle und vorzugsweise mehrere Eingabequellen und mindestens ein Ausgabeziel umfasst. Wenn mehrere Eingabequellen vorhanden sind, kann jede der Eingabequellen mit unterschiedlichen Medien gefüllt werden (z.B. verschiedene Papiersorten oder Papierformate). Die Druckvorrichtung 26 kann in der Lage sein, sortierte Ausgabesätze von Bogen zu erstellen, die in einem oder in mehreren der Ausgabeziele abgelegt werden.

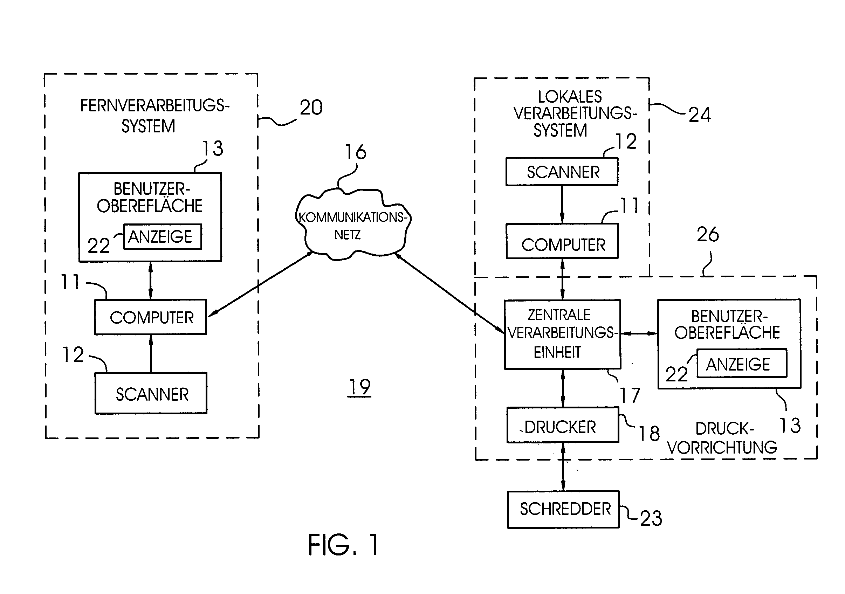

Fig. 1 zeigt ein Blockdiagramm des Dokumenterstellungssystems 19. Das Dokumenterstellungssystem 19 umfasst ein Fernverarbeitungssystem 20, ein Kommunikationsnetz 10, ein lokales Verarbeitungssystem 24 und eine Druckvorrichtung 26. Das Fernverarbeitungssystem 20 kann mit der Druckvorrichtung 26 über das Kommunikationsnetz 10 kommunizieren. Das lokale Verarbeitungssystem 24 kann direkt mit der Druckvorrichtung 26 kommunizieren.

Das Dokumenterstellungssystem 19 erleichtert die Umwandlung einer physischen Darstellung (z.B. einer gedruckten Seite) eines Eingabebildes in eine elektronische Darstellung an dem lokalen Verarbeitungssystem 24 oder dem Fernverarbeitungssystem 20. Das Dokumenterstellungssystem 19 ermöglicht über das Kommunikationsnetz 10 die Übertragung einer elektronischen Darstellung eines oder mehrerer Eingabebilder von einem Fernverarbeitungssystem 20 auf die Druckvorrichtung 26. Die Druckvorrichtung 26 verarbeitet die elektronische Darstellung in einer Weise, die die seitenweise Weiterleitung der Ausgabeseiten an ein oder mehrere Ausgabeziel(e) des Druckers 18 unterstützt.

Das Fernverarbeitungssystem 20 umfasst eine mit einem Computer 11 gekoppelte Benutzeroberfläche 13. Der Computer 11 ist seinerseits an einen Scanner 12 gekoppelt. In einem Ausführungsbeispiel stellt die Benutzeroberfläche 13 eine grafische Benutzeroberfläche dar, die eine Tastatur, eine Zeigeeinrichtung (z.B. Maus), eine Anzeige 22 und zugehörige Softwareanweisungen zur Unterstützung der Tastatur, der Zeigeeinrichtung und der Anzeige 22 umfasst. Der Computer 11 kann eine Quelle oder ein Ziel für einen Druckauftrag oder mehrere Druckaufträge für die Druckvorrichtung 26 darstellen. Beispielsweise kann der Computer 11 einen Druckauftrag unterstützen, der vom Betrieb des Scanners 12 abgeleitet worden ist. Der Computer 11 kann die Druckaufträge einschließlich der elektronischen Darstellungen der Eingabebilder oder Dokumente über das Kommunikationsnetz 10 an die Druckvorrichtung 26 übertragen. Mit Kommunikationsnetz 10 kann das Internet, ein Intranet, ein Kopplungsnetz, ein Datenpaket übermittelndes Netz, ein Ethernet-System oder ein anderes, geeignetes Kommunikationsnetz gemeint sein.

Das lokale Verarbeitungssystem 24 umfasst einen an einen Computer 11 gekoppelten Scanner 12. Der Computer 11 verwaltet die Kommunikation mit einer zentralen Verarbeitungseinheit ("CPU") 17 der Druckvorrichtung 26. Das lokale Verarbeitungssystem 24 kann eine Quelle oder ein Ziel für einen Druckauftrag oder mehrere Druckaufträge für die Druckvorrichtung 26 darstellen.

Das Fernverarbeitungssystem 20 oder das lokale Verarbeitungssystem 24 können elektronische Darstellungen von Eingabebildern zur Ausführung durch die Druckvorrichtung 26 erzeugen. Der Scanner 12 unterstützt das Scannen von Seiten mit Eingabebildern und das Erstellen einer elektronischen Darstellung der Eingabebilder für das Ausdrucken auf der Druckvorrichtung 26.

Die Druckvorrichtung 26 umfasst eine CPU 17, die mit einer Benutzeroberfläche 13 und einem Drucker 18 gekoppelt ist. Die Benutzeroberfläche 13 umfasst eine Anzeige 22. Die CPU 17 ist ein Computer oder ein Datenverarbeitungssystem, die Druckaufträge über das Kommunikationsnetz 10 oder auf sonstige Weise entgegen nehmen. Beispielsweise können die Druckaufträge von dem Fernverarbeitungssystem 20, dem lokalen Verarbeitungssystem 24 oder von beiden Systemen stammen.

Die CPU 17 steuert viele oder alle Aspekte, die das Drucken eines oder mehrerer Druckaufträge auf dem Drucker 18 betreffen. Die CPU 17 kann physisch mit Hilfe eines oder mehrerer Datenprozessoren implementiert sein, und zwar in einer konventionellen oder in einer parallelen Rechnerarchitektur zur Steuerung des Druckvorgangs. Die CPU 17 kann ein Medienzuführungsmuster für jeden Ausgabesatz eines Druckauftrags bestimmen, um eine gewünschte Darstellungscharakteristik der Bogen eines Ausgabesatzes zu erzielen. Die gewünschte Darstellungscharakteristik kann das Skalieren eines Bildes, die Auflösung eines Bildes, den Kontrast eines Bildes, die Helligkeit eines Bildes, die Reihenfolge von Bogen in einem Ausgabesatz, die Wahl von Medien für verschiedene Bogen in einem Ausgabesatz, das Stapeln von Bogen in einem Ausgabesatz, das Binden von Ausgabesätzen, Löcher in Medien des Ausgabesatzes oder andere Attribute umfassen, die die visuelle Darstellung eines Druckauftrags betreffen.

Die Druckvorrichtung 26 kann Datenbits zum Rekonfigurieren oder anderweitigen Ändern des Arbeitsvorgangs der CPU an Speicherplätze in ihren jeweiligen Speichersystemen enthalten. Die Speicherorte, wie z.B. der Random Access Memory ("RAM") sind physische Orte, die bestimmte elektrische, magnetische oder optische Eigenschaften entsprechend der Datenbits aurweisen, je nach der Art des verwendeten Speichers. Das lokale Verarbeitungssystem 24 und das Fernverarbeitungssystem 20 umfassen auch jeweils zentrale Verarbeitungseinheiten (nicht dargestellt) in ihren Rechnern 11 und ebenso jeweils Speichersysteme (nicht dargestellt).

Die Datenbits können auch auf einem computerlesbaren Medium enthalten sein, z.B. Magnetdisketten, optische Disketten und andere Temporär- oder Festspeichersysteme, die von der CPU 17, der Druckvorrichtung 26 oder von den Computern 11 in dem lokalen Verarbeitungssystem 24 und dem Fernverarbeitungssystem 20 gelesen werden können. Das computerlesbare Medium umfasst zusammenwirkende oder miteinander verbundene computerlesbare Medien, die sich ausschließlich auf der Druckvorrichtung 26 befinden oder auf mehrere miteinander verbundene Verarbeitungssystemen verteilt sind, wie z.B. dem lokalen Verarbeitungssystem 24 oder dem Fernverarbeitungssystem 20.

Die Benutzeroberfläche 13 unterstützt die Funktionsauswahl eines Benutzers der Druckvorrichtung 26 oder Präferenzen in der endgültigen Darstellung des Ausgabesatzes oder des durch die Druckvorrichtung 26 gedruckten Druckauftrags. Bei Eingang eines Druckauftrags an der CPU 17 verwendet ein Benutzer der Druckvorrichtung 26 die Benutzeroberfläche 13, um den Status des Druckauftrags oder der Druckaufträge zu prüfen. Der Benutzer kann über die Benutzeroberfläche 13 zudem ermitteln, wie die Druckaufträge eingerichtet sind. Die Anzeige 22 der Benutzeroberfläche 13 kann mit getrennten Schirmen ausgestattet sein, die entsprechenden Funktionen zugeordnet sind, wie beispielsweise der Statusanzeige für den Druckauftrag und der Strukturierung der Einrichtung der Druckaufträge. Ein Schirm stellt ein Bild dar, das an der Anzeige 22 der Benutzeroberfläche 13 angezeigt wird.

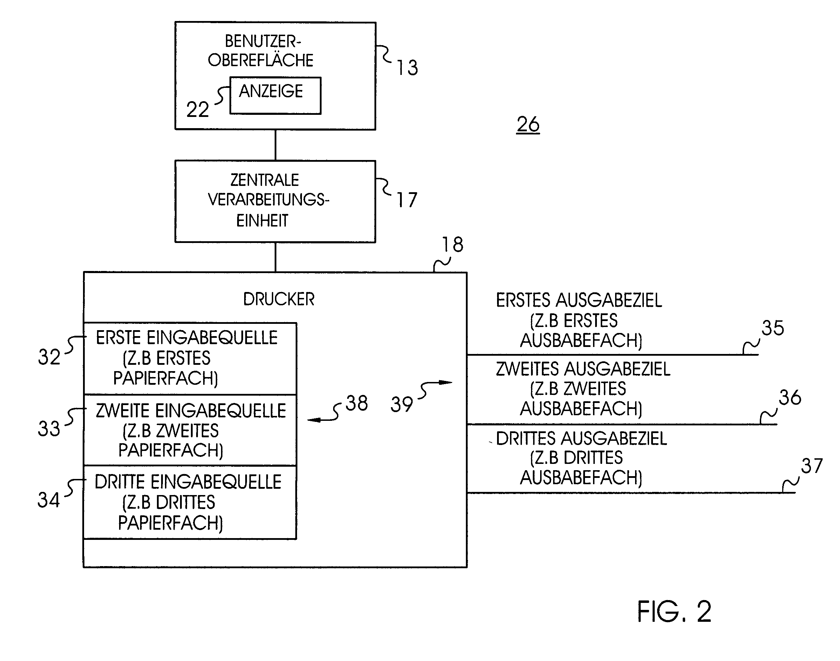

Ein zusätzlicher Schirm ermöglicht dem Bediener die Anzeige der Attribute der Medien, die in die Eingabequellen eingelegt sind, wie in Fig. 2 gezeigt. Ein weiterer Schirm zeigt Anweisungen zur Staubeseitigung an, so dass der Benutzer über derartige Anweisungen oder sofortige Rückmeldungen über die Beseitigungsmaßnahmen informiert wird, die der Benutzer an dem Drucker 18 vorgenommen hat.

Fig. 2 zeigt ein Blockdiagramm einer Druckvorrichtung 26, die mehrere Eingabequellen 38 und mehrere Ausgabeziele 39 umfasst. Gleiche Bezugsziffern in Fig. 1 und in Fig. 2 bezeichnen gleiche Elemente. Obwohl drei Eingabequellen 38 und drei Ausgabeziele 39 gezeigt werden, kann die Druckvorrichtung 26 in anderen Ausführungsbeispielen, die in den Geltungsbereich der Erfindung fallen, auch nur eine Eingabequelle und ein Ausgabeziel haben. Wie in Fig. 2 gezeigt, umfassen die Eingabequellen 38 eine erste Eingabequelle 32, eine zweite Eingabequelle 33 und eine dritte Eingabequelle 34. Die Ausgabeziele 39 umfassen ein erstes Ausgabeziel 35, ein zweites Ausgabeziel 36 und ein drittes Ausgabeziel 37.

Die Eingabequellen 38 können mehrere verschiedene alternative Strukturen aufweisen. Nach einer ersten Alternative können die Ausgabequellen 38 Druckfächer umfassen, die eine Auswahl an verschiedenen Mediensorten (z.B. Papier) enthalten. Wenn der Drucker 18 in Betrieb ist, durchlaufen die Medien in den Druckfächern den Drucker 18 und können ein Bild aufnehmen, das von einem Druckabschnitt (nicht dargestellt) gedruckt wird. Gemäß einer zweiten Alternative können die Eingabequellen Einfügvorrichtungen umfassen, die eine weitere Auswahl von verschiedenen Mediensorten enthalten, die den Drucker 18 durchlaufen, ohne dass sie bedruckt werden. Medien aus den Einrügvorrichtungen können einen anderen Papierpfad in dem Drucker 18 durchlaufen, der nicht durch den Druckabschnitt führt. Beispiele für eingefügte Medien umfassen Medien, die nicht von dem Drucker 18 mit einem Bild bedruckt werden, wie z.B. fertige fotografische Einlagen, vorgedruckte Einlagen, geordnete Medien (z.B. Register oder sortierte Farbeinlagen) und Trenneinlagen.

Die Ausgabeziele 39 können mehrere, verschiedene, alternative Strukturen darstellen. Nach einer ersten Alternative können die Ausgabeziele 39 als Fächer zur Aufnahme von Sortimenten verschiedener Mediensorten ausgebildet sein. Nach einer zweiten Alternative können die Ausgabeziele 39 verschiedene Endverarbeitungsvorrichtungen darstellen, die eine oder mehrere Seiten verarbeiten, nachdem die Seiten bedruckt worden sind, oder nachdem die Seiten den Drucker 18 durchlaufen haben, ohne bedruckt worden zu sein. Die Endverarbeitungsvorrichtungen können einen Hefter, einen Stapler, eine Falzvorrichtung, einen Binder oder andere Weiterverarbeitungsstationen zur Weiterverarbeitung von Medien, die an das Ausgabeziel gesendet worden sind, umfassen. Beispielsweise kann das erste Ausgabeziel 35 einem Hefter zugeordnet sein, der Papiergruppen heftet, das zweite Ausgabeziel 36 kann einem Stapler zugeordnet sein, der Papier in sequentieller Reihenfolge stapelt, während das dritte Ausgabeziel 37 einem Falzer zugeordnet sein kann, der Papier falzt, um die selektive Verarbeitung der Ausgabeseiten eines Ausgabesatzes eines Druckauftrags zu ermöglichen.

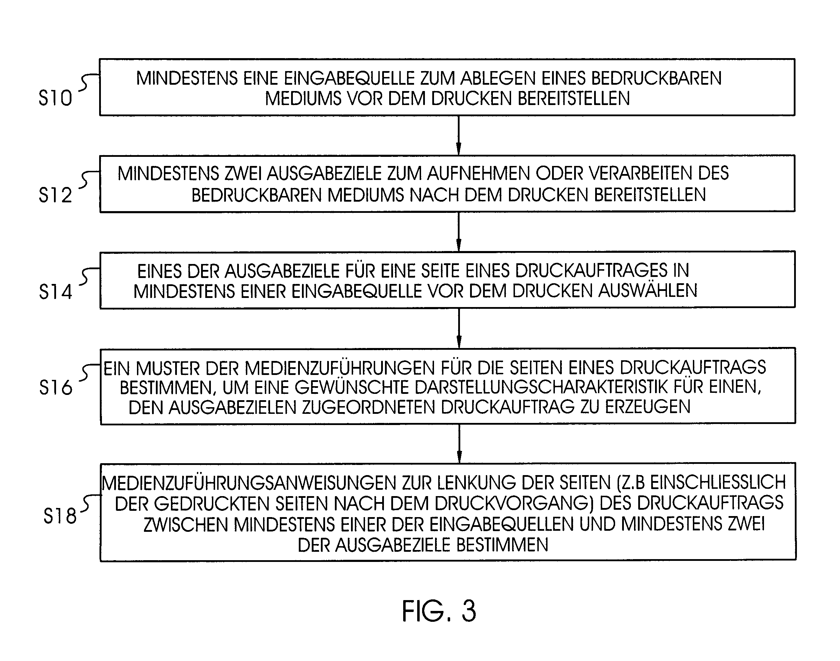

Fig. 3 ist ein Ablaufdiagramm eines Verfahrens zur Lenkung von Eingabeseiten zu einem oder mehreren gewählten Ausgabezielen eines Druckers 18 gemäß der vorliegenden Erfindung. Das in Fig. 3 gezeigte Verfahren beginnt mit Schritt S10.

In Schritt S10 stellt die Druckvorrichtung 26 mindestens eine Eingabequelle 38 bereit (z.B. eine erste Eingabequelle 32), um ein Medium vor dem Drucken zu lagern oder das Medium anders zu handhaben. Das bedruckbare Medium kann Papier, ein Polymerfilm, ein Dia, ein Fotopapier, ein Gewebetuch oder ein anderes Medium sein, das zum Bedrucken geeignet ist.

In Schritt S12, der vor, nach oder gleichzeitig mit Schritt S10 erfolgen kann, stellt die Druckvorrichtung 26 ein oder mehrere Ausgabeziele 39 zur Aufnahrne oder Verarbeitung des Mediums nach dem Drucken oder nachdem die Seiten den Drucker 18 durchlaufen haben, ohne bedruckt worden zu sein, bereit. In einem Ausführungsbeispiel umfassen die Ausgabeziele 39 Papierfächer zur Aufnahme oder Verarbeitung des Mediums. Ein solches Papierfach ist dem Fachmann als "oberstes Fach" bekannt, das Medien sammeln kann, die von dem Druckauftrag entsorgt werden. In einem anderen Ausführungsbeispiel umfassen die Ausgabeziele Weiter- oder Endbearbeitungsvorrichtungen zum Heften, Binden, Falzen oder Sortieren einer oder mehrerer Ausgabeseiten eines Druckauftrags.

In Schritt S14 unterstützt die Benutzeroberfläche 13 die Wahl eines der Ausgabeziele 39 für eine beliebige Seite eines Druckauftrags in mindestens einer der Eingabequellen 38 vor dem Drucken. Die CPU 17 speichert einen Druckauftragsbezeichner und Seitenbezeichner (z.B. Seitennummern), die dem Druckauftragsbezeichner zugeordnet sind. Jedem Seitenbezeichner in dem Druckauftrag kann die CPU 17 eine bestimmte Eingabequelle 38 zuordnen, um ein gewünschtes Eingabemedium und ein Ausgabeziel 39 zu wählen. Die Wahl des Ausgabeziels 39 kann die individuell angepasste Verarbeitung einer einzelnen Seite unterstützen, beispielsweise die Verarbeitung nach dem Drucken.

In Schritt S16 ermittelt die CPU 17 ein Muster von Medienzuführungen für die Seitenbezeichner oder Seiten eines Druckauftrags, um eine gewünschte Darstellungscharakteristik oder mehrere Charakteristika für einen Druckauftrag zu erzeugen, der den Ausgabezielen 39 zugeordnet ist. Die CPU 17 kann einen Druckauftrag in einer Tabelle oder Datenbank organisieren, die das Medienzuführungsmuster anhand eines oder mehrerer der folgenden Felder definiert: Auftragsbezeichner, Seitenbezeichner, Eingabequelle und Ausgabequelle. Die CPU 17 kann in der Tabelle oder Datenbank zudem ein Druckanzeigefeld aufweisen. Das Druckanzeigefeld zeigt an, ob ein Drucker 18 eine bestimmte Seite (mit einem zugehörigen Seitenbezeichner) bedruckt oder diese Seiten frei lässt, bevor oder während die Seite zu dem Ausgabeziel gelenkt wird.

In Schritt S18 bestimmt die CPU 17 Medienzuführungsanweisungen zur Lenkung der Seiten (z.B. einschließlich der gedruckten Seiten nach dem Druckvorgang) des Druckauftrags zwischen mindestens einer der Eingabequellen und mindestens einem der Ausgabeziele. Die CPU 17 wandelt die Informationen in der Tabelle oder Datenbank in druckerlesbare Sprache oder Anweisungen zur Steuerung des Druckbetriebs und der Lenkung der Seiten von der mindestens einen Eingabequelle 38 zu einer oder mehreren Ausgabezielen 39 um.

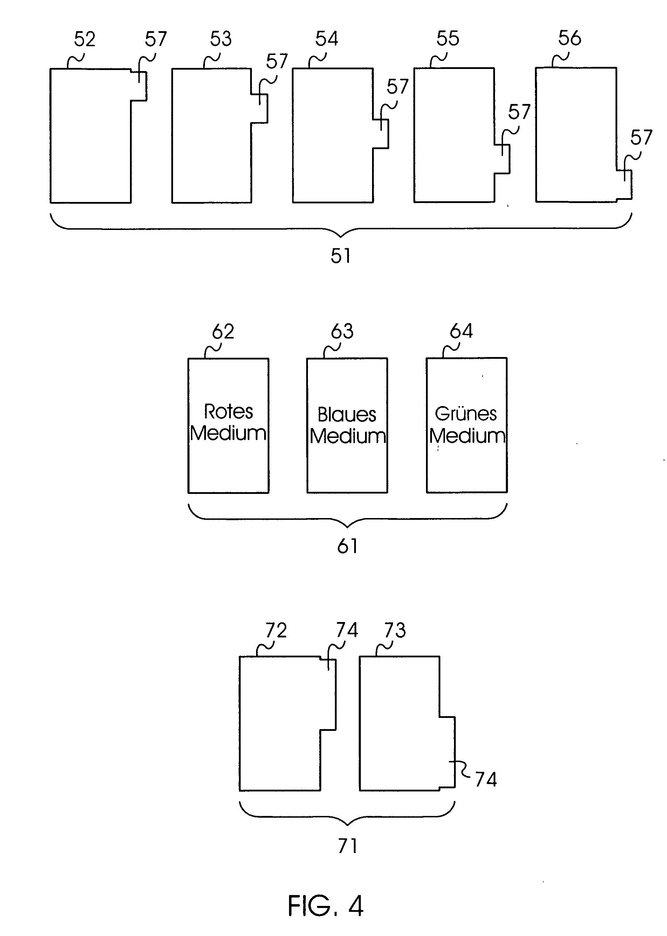

Fig. 4 zeigt mehrere Beispiele von Gruppen (51, 61 und 71) sequentiell geordneter Seiten zur Anordnung in der Eingabequelle 38 der Druckvorrichtung 26. Eine erste Gruppe 51 sequentiell geordneter Seiten umfasst Register 57, deren Lage sich auf jeder Folgeseite ändert. Obwohl die erste Gruppe 51 eine erste Seite 52, eine zweite Seite 53, eine dritte Seite 54, eine vierte Seite 55 und eine fünfte Seite 56 umfasst, kann eine alternative Ausführungsform mehr oder weniger Seiten für die erste Gruppe 51 umfassen. Eine zweite Gruppe 61 sequentiell geordneter Seiten umfasst verschiedenfarbige Seiten. Obwohl die zweite Gruppe 61 eine rote Seite 62, eine blaue Seite 63 und eine grüne Seite 64 umfasst, können für die zweite Gruppe 61 andersfarbige Seiten in den Geltungsbereich der Erfindung fallen. Eine dritte Gruppe 71 sequentiell geordneter Seiten umfasst Seiten mit mindestens zwei verschiedenen Registerpositionen 74. Die Register der dritten Gruppe 71 können bedruckt sein, auch wenn sie zuerst in die Eingabequelle 38 eingelegt werden. Die dritte Gruppe 71 umfasst zwar eine erste Seite 72 und eine zweite Seite 73, aber die Anzahl der Seiten kann in einem alternativen Ausführungsbeispiel im Allgemeinen gleich groß wie die Anzahl der Registerpositionen sein. In einer beliebigen der zuvor genannten Eingabequellen 38 kann sich Papier im Format A4 befinden (210 mm x 297 mm, entspricht in etwa dem angelsächsischen Format "Letter" der Größe 8,5 x 11 Zoll (216 mm x 279 mm)) oder ein anderes Medium anstelle der zuvor genannten Medien.

Ein Benutzer des Druckers 18 kann die erste Gruppe 51, die zweite Gruppe 61 oder die dritte Gruppe 71 in entsprechende Eingabequellen 38 laden. Beispielsweise kann der Benutzer sich wiederholende Sätze der ersten Gruppe 51 in die erste Eingabequelle 32 laden, sich wiederholende Sätze der zweiten Gruppe 61 in die zweite Eingabequelle 33 und sich wiederholende Sätze der dritten Gruppe 71 in die dritte Eingabequelle 34. Der Benutzer gibt eine Auswahl der Eingabequellen 38 oder eine Auswahl eines bestimmten Mediums oder einer Anordnung von Medien, die einer Eingabequelle 38 zugeordnet sind, vor dem Bedrucken der Seiten für einen Druckauftrag oder einer anderweitigen Verarbeitung der Seiten in die Eingabequellen 38 ein.

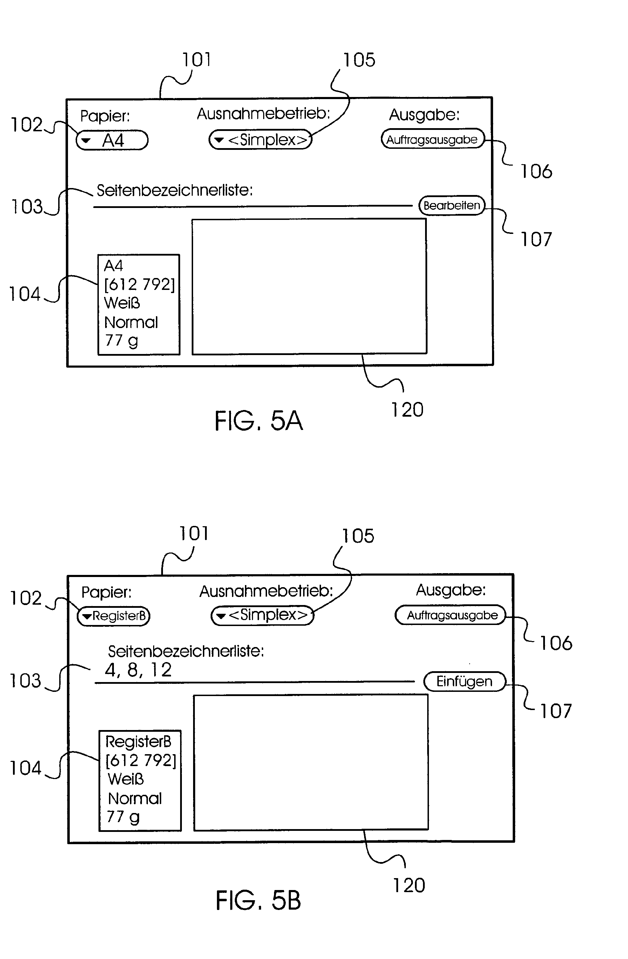

Fig. 5A bis 5D zeigen verschiedene Schirme, die auf der Benutzeroberfläche 13 des Fernverarbeitungssystems 20, der Druckvorrichtung 26 oder an beiden dargestellt werden können. Ein Schirm ist ein Bild an der Anzeige 22, das den Dialog des Benutzers mit der Druckvorrichtung 26 unterstützt. Ein Schirm kann auf der Anzeige 22 angezeigt werden, um einem Benutzer die Steuerung verschiedener Aspekte der Druckvorrichtung 26 zu ermöglichen.

Der Schirm 101 aus Fig. 5A umfasst eine Medienanzeige 102 (z.B. "Papier"), einen Ausnahmebetrieb 105, eine Ausgabezielanzeige 106 (z.B. "Ausgang") und eine Bearbeitungsanzeige 107 (z.B. "Bearbeiten"). Die Betriebsparameter der Medienanzeige 102, des Ausnahmebetriebs 105, der Ausgabezielanzeige 106 und der Bearbeitungsanzeige 107 sind aus Pulldown-Menüs wählbar. Ein Benutzer kann ein Pulldown-Menü mithilfe der Zeigeeinrichtung der Benutzeroberfläche 13 oder auf andere Weise öffnen. Alternativ dazu können die Medienanzeige 102, der Ausnahmebetrieb 105, die Ausgabezielanzeige 106 und/oder die Bearbeitungsanzeige 107 als Textfenster erscheinen, die dem Benutzer gleichzeitig eine ausgewählte Liste von Betriebsparametern anstelle der Pulldown-Menus anzeigen.

In einem Beispiel kann der Benutzer ein Medium für die zu druckenden Seiten wählen, indem er das der Medienanzeige 102 zugeordnete Pulldown-Menü benutzt. Für die durch die Medienanzeige 102 angezeigte Medienauswahl (z.B. "Papier") werden die entsprechenden Attribute in einem Textfeld 104 dargestellt. In einer bevorzugten Ausführungsform der vorliegenden Erfindung wählt der Benutzer die Medien aus einem Papierkatalog aus. Der Papierkatalog ist eine Liste, deren Einträge dem gesamten Lagerbestand an Medien, welche dem Benutzer in der Druckerei zugänglich sind und auf dem Drucker 18 geladen werden können, entsprechen. Der Eintrag für ein ausgewähltes Medium in dem Papierkatalog umfasst einen Bezeichner für das Medium und dessen jeweilige Attribute. Für jede Druckerei kann eine eigene, spezifische Liste nötig sein, die dem in der Druckerei erhältlichen Lagerbestand entspricht. Der Druckkatalog ist nachfolgend ausführlicher beschrieben.

Der Benutzer kann eine Duplex-Kopie (d.h. beidseitige Kopie) oder eine Simplex-Kopie (d.h. einseitige Kopie) über das dem Ausnahmebetrieb 105 zugeordnete Pulldown-Menü wählen. Der Benutzer kann ein Ausgabeziel 39 über das der Ausgabezielanzeige 106 zugeordnete Pulldown-Menü wählen. Das gewählte Ausgabeziel kann allgemein als "<Auftragsausgabe>" bezeichnet werden. Wenn ein Benutzer ein bestimmtes Ausgabeziel als "<Auftragsausgabe>" für einen Druckauftrag auswählt, wird das jeweilige Ausgabeziel als primäres Ausgabeziel für den Druckauftrag betrachtet. Das gewählte Ausgabeziel bestimmt, wie eine Seite aus einer Eingabequelle 38 zum Ausgabeziel 39 des Druckers 18 geleitet wird. Die Optionen für Pulldown-Menüs der Ausgabezielanzeige 106 lauten: "<Auftragsausgabe>", "Aus1", "Aus2", "Aus3", "Aus1+", "Aus2+", "Aus3+", wobei "Aus1" eine Abkürzung für das erste Ausgabeziel 35 ist, "Aus2" eine Abkürzung für das zweite Ausgabeziel 36 und "Aus3" eine Abkürzung für das dritte Ausgabeziel 37.

Die Staubeseitigungsanzeige wird durch das "+"-Zeichen dargestellt, das der obengenannten Abkürzung der Ausgabeziele angehängt ist. Die Staubeseitigungsanzeige gibt an, dass der Benutzer für die bezeichneten Seiten und Medien Unterstützung bei der Staubeseitigung wünscht.

Der Benutzer gibt eine Liste von Seitenbezeichnern (z.B. Seitenzahlen) und das Schlüsselwort "letzte" in die Seitenbezeichnerliste 103 ein (z.B. "Seitenliste"), um die zuvor eingegebene Medienanzeige 102, den Ausnahmebetrieb 105 und die Ausgabezielanzeige 106 auf die in der Seitenbezeichnerliste 103 bezeichneten Seiten anzuwenden. Nach dem Eingeben der Seitenzahlen in die Seitenbezeichnerliste kann der Benutzer aus dem Bearbeitungsmenü 107 eine Bearbeitungsoption für den Druckauftrag wählen.

Fig. 5B zeigt einen Schirm so wie er aussehen würde, nachdem ein Benutzer eine Liste mit Seitennummern über die Benutzeroberfläche 13 auf der Seitenbezeichnerliste 103 eingegeben hat. Der Benutzer wählte zudem ein neues Medium mit der Bezeichnung "RegisterB", indem er eine entsprechende Wahl in einem Pulldown-Menü traf, das der Medienanzeige 102 zugeordnet ist. In einer bevorzugten Ausführungsform wählt der Benutzer "RegisterB" aus dem Papierkatalog aus, wie nachfolgend genauer ausgeführt ist. Das gewählte Medium wird im Textfeld 104 beschrieben. Abschließend wählt der Benutzer die Option "Einfügen" aus einem der Bearbeitungsanzeige 107 zugeordneten Menü.

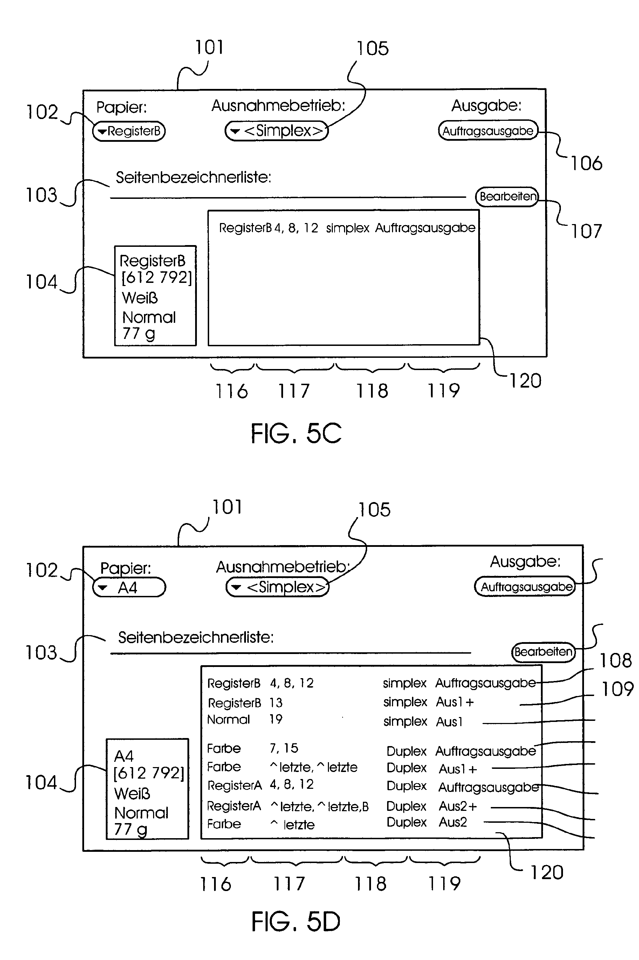

Fig. 5C zeigt den Schirm nach Ausführung der Prozedur aus Fig. 5B. Das Textfenster 120 aus Fig. 5C weist vier Hauptspalten auf (116, 117, 118 und 119). Die linke Spalte 116 weist die Medienanzeige 102 aus. Die erste Zwischenspalte 117 weist eine Seitenbezeichnerliste 103 aus. Die zweite Zwischenspalte 118 weist den Ausnahmebetrieb 105 aus. Die rechte Spalte 119 weist die Ausgabezielanzeige 106 aus. Die Anweisungen in dem Textfenster 120 liegen in einem Format vor, das zur Verarbeitung durch die CPU 17 geeignet ist.

Durch wiederholte Eingabe von Daten über die Benutzeroberfläche 13 kann der Benutzer das Textfenster 120 entsprechend der Darstellung in Fig. 5D auffüllen. Der Schirm aus Fig. 5D weist eine Vielzahl von Zeilen auf, die von 108 bis 115 einschließlich nummeriert sind. Basierend auf der Eingabe des Benutzers erzeugt die Benutzeroberfläche 13 die Zeilen 113 und 114 in dem Textfenster 120 der Benutzeroberfläche 13, wie in Fig. 5D gezeigt. Im Textfenster 120 aus Fig. 5D lautet in der linken Spalte der Medienname "RegisterA". Der Benutzer möchte alle Seiten drucken. Der Benutzer aktiviert die Staubeseitigungsmeldungen, indem er das Pluszeichen **"+"** an das gewünschte Ausgabeziel anhängt (z.B. "Aus2+"), wie in Spalte 119 gezeigt.

Gemäß einer bevorzugten Ausführungsform der Erfindung erzeugt die Druckvorrichtung 26 für den Benutzer grafische Darstellungen an der Anzeige 22, um den Benutzer bei einer Staubeseitigung zu unterstützen. Die Staubeseitigungsfunktion kann insbesondere in Druckvorrichtungen wichtig sein, in denen geordnete Medien Bogen mit unterschiedlichen physischen Eigenschaften umfassen, beispielsweise Registerblätter. In einer derartigen Anordnung richtet der Benutzer den Druckauftrag ein, indem er das Papier für den Hauptteil des zu druckenden Dokuments in die erste Eingabequelle 32 einlegt. In der zweiten Eingabequelle 33 werden Sätze geordneter Medien (mindestens einer) bereitgestellt. Jeder Bogen der geordneten Medien umfasst eine Vielzahl verschiedener Bogen, die an bestimmten Stellen dieses Teils des zu druckenden Dokuments einzulügen sind. Wenn in der Vorrichtung ein Stau auftritt, muss der Bediener wissen, an welcher Stelle er den Vorgang in dem Satz der geordneten Medien, die sich zum Zeitpunkt des Staus in Verarbeitung befinden, wieder fortsetzt. Der Benutzer muss also wissen, ob Bogen aus dem Satz der geordneten Medien herausgenommen werden müssen.

In einem Ausführungsbeispiel der vorliegenden Erfindung ist die CPU 17 so programmiert, dass sie in der Quelle der geordneten Medien die richtige Stelle ermittelt, an der der Vorgang wieder fortgesetzt wird, nachdem ein Stau in der Druckvorrichtung 26 aufgetreten ist. Die CPU 17 ermittelt also, welche Bogen, falls überhaupt, in dem vor Auftreten des Staus verwendeten Satz zu entfernen sind. Die CPU 17 erzeugt eine den Bogen zugeordnete grafische Darstellung und überträgt die grafische Darstellung an die Anzeige 22 der Benutzeroberfläche 13. Die grafische Darstellung zeigt den entsprechenden Startpunkt der geordneten Medien nach Auftreten eines Staus an. Die grafische Darstellung kann beispielsweise eine Grafik sein, in der die fertigen Seiten hervorgehoben sind, um dem Benutzer den Startpunkt zum Fortsetzen des Vorgangs mitzuteilen. Alternativ hierzu kann das System eine Grafik darstellen, die den jeweiligen Bogen zeigt, mit dem der Vorgang wieder gestartet werden muss. Der Benutzer entnimmt dann die Bogen der geordneten Medien, die aus der Eingangsquelle zu entsorgen sind, die die geordneten Medien enthält.

Für geordnete Medien, die Register umfassen, zeigt das System vorzugsweise an der Anzeige 22 eine grafische Darstellung des richtigen Registers an, mit dem der Vorgang wieder fortzusetzen ist.

Nach einem anderen Merkmal der vorliegenden Erfindung ist der Scanner 12 verwendbar, um ein Bild aus dem Satz der geordneten Medien zu scannen. Dies kann insbesondere bei geordneten Medien hilfreich sein, die Fotografien beinhalten, die voneinander nur schlecht zu unterscheiden sind. Das gescannte Bild wird dann im Speicher abgelegt; im Falle eines Staus ermittelt die CPU 17 den Startpunkt für die geordneten Medien. Das von der CPU 17 gelieferte Bild der geordneten Medien in richtiger Reihenfolge wird dann an der Anzeige 22 angezeigt. Vorzugsweise erfolgt diese Implementierung durch Erzeugen einer Miniaturdarstellung der geordneten Medien am Schirm und durch Hervorheben der richtigen Miniaturdarstellung, um dem Benutzer mitzuteilen, mit welchem Bild der Vorgang wieder fortgesetzt werden soll. Vorzugsweise ist die CPU 17 derart programmiert, dass sie ein vergrößertes Bild des richtigen Bogens zur besseren Betrachtung durch den Benutzer anzeigt. In einem Ausführungsbeispiel lässt sich das System so programmieren, dass ein Bild des gescannten Satzes der geordneten Medien oder der Registerblätter gespeichert wird, die für einen bestimmten Auftrag notwendig sind. Die gespeicherten Daten sind dann als Teil vorgegebener Auftragszettel verwendbar. Dieses Merkmal kann insbesondere für regelmäßig wiederkehrende Aufträge sinnvoll sein. Wenn ein Auftrag beispielsweise einmal monatlich verarbeitet wird, kann der Benutzer die gescannten Bilder mit einem Auftragszettel ablegen, um in den folgenden Monaten nur noch den Auftragszettel aufrufen zu müssen.

Gemäß der Darstellung in Fig. 5D kann der Benutzer die Zeile 110 erzeugen. Im Unterschied zu den vorausgehenden Beispielen aktiviert der Benutzer in Zeile 110 die Staubeseitigungsmeldungen nicht. In Zeile 110 wird die Seite neunzehn des Auftrags an das erste Ausgabeziel 35 gesendet. Der Benutzer kann für einen Teil des Druckauftrags, beispielsweise für die Seite neunzehn, eine andere Verarbeitung durch die Druckvorrichtung 26 vorsehen. Seite neunzehn kann beispielsweise ein gedrucktes Anweisungsblatt für den Benutzer sein, aus dem hervorgeht, was mit dem übrigen Teil der Druckausgabe zu geschehen hat. Es kann sich dabei auch um eine Statusseite handeln.

Der Benutzer kann die Zeilen 111, 112 und 115 eingeben. Die Anweisungen aus Zeile 111 in dem Textfenster 120 würden die Druckvorrichtung 26 anweisen, ein "farbiges" Medium für Seite sieben und fünfzehn zu bedrucken. Die Anweisungen aus Zeile 112 weisen die Druckvorrichtung 26 an, zwei unbedruckte Bogen eines "farbigen" Mediums am Ende jedes Satzes zum ersten Ausgabeziel 35 zu senden. Die Anweisungen aus Zeile 115 weisen die Druckvorrichtung an, einen unbedruckten Bogen eines "farbigen" Mediums zum zweiten Ausgabeziel 36 zu senden.

Es sei jedoch darauf hingewiesen, dass die Schirme 101 aus Fig. 5A bis Fig. 5B nur zu Illustrationszwecken gedacht sind und dass die Benutzeroberfläche 13 der vorliegenden Erfindung nicht auf die in Fig. 5A bis 5D gezeigten Schirme beschränkt ist. Die Benutzeroberfläche 13 kann andere Schirmanordnungen aufweisen, die mehr oder weniger Anzeigen enthalten. Darüber hinaus kann die Benutzeroberfläche mehrere Schirme anstelle des einen in Fig. 5A und Fig. 5B gezeigten Schirms aufweisen. Die Mehrzahl von Schirmen ermöglicht dem Benutzer die Steuerung verschiedener Aspekte der Druckvorrichtung 26.

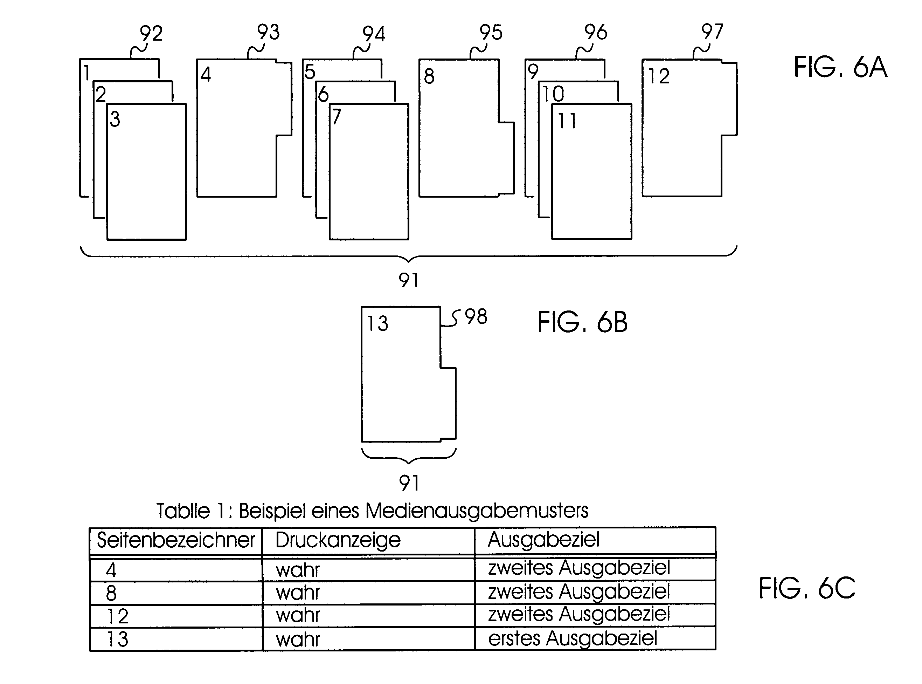

Fig. 6A und 6B zeigen gemeinsam ein Beispiel eines Ausgabesatzes 91, der von der Druckvorrichtung 26 erzeugt werden kann. Der Ausgabesatz 91 kann aus dreizehn Eingabeseiten aus einer oder mehreren Eingabequellen 38 erzeugt werden. Hier wurde über die Benutzeroberfläche 13 bereits das zweite Ausgabeziel 36 als "Auftragsausgabe" für den Druckauftrag angegeben. Die erste Eingabequelle 32 enthält Papier oder andere Medien mit zwei Registern. Die zweite Eingabequelle 33 enthält Medien des Typs "A4", also Papier im Format 210 mm x 297 mm. Um den Ausgabesatz aus Fig. 6A und Fig. 6B zu erzeugen, gibt der Benutzer die Zeilen 108 und 109 aus Fig. 5D des Textfensters 120 über die Benutzeroberfläche 13 ein. Der Medienname für das Papier mit zwei Registern lautet "RegisterB", wie in Spalte 116 des Textfensters 120 in Fig. 5D gezeigt. Der Benutzer möchte sämtliche Seiten des Ausgabesatzes mit "RegisterB" für die Seiten 4, 8 und 12 drucken. Der Benutzer aktiviert die Staubeseitigungsmeldungen für Seite dreizehn, indem er das Pluszeichen "+" an das gewünschte Ausgabeziel anhängt, wie in Spalte 119 gezeigt.

Fig. 6A und 6B zeigen einen Ausgabesatz 91 eines Druckauftrags, der den im Textfenster 120 über die Benutzeroberfläche 13 eingegebenen Anweisungen entspricht. Die Seiten in der Gruppe aus Fig. 6A werden zum zweiten Ausgabeziel 36 gesendet. Die Seiten der Gruppe aus Fig. 6A werden im zweiten Ausgabeziel 36 jeweils übereinander gestapelt. Fig. 6A stellt die A4-Bogen und die Medienbogen des Typs "RegisterB" nebeneinander dar, damit die Medienbogen des Typs "RegisterB" eindeutig unterschieden werden können.

Die CPU 17 lenkt die Seiten eins, zwei und drei, die gemeinsam als Gruppe 92 bezeichnet sind, von der zweiten Eingabequelle 33 zum zweiten Ausgabeziel 36. Die aus den Seiten eins, zwei und drei bestehende Gruppe 92 stellt bedruckte oder unbedruckte Medien des Typs "A4". Dann lenkt die CPU 17 die mit 93 bezeichnete Eingabeseite vier von der ersten Eingabequelle 32 zum zweiten Ausgabeziel 36. Seite vier 93 stellt den ersten Typ der bedruckten oder unbedruckten "RegisterB"-Medien dar. Drittens lenkt die CPU 17 die Seiten fünf, sechs und sieben, die gemeinsam als Gruppe 94 bezeichnet sind, von der zweiten Eingabequelle 33 zum zweiten Ausgabeziel 36. Die Seiten fünf, sechs und sieben stellen Medien des Typs "A4" oder bedruckbare A4-Medien dar. Viertens lenkt die CPU 17 die mit 95 bezeichnete Eingabeseite acht von der ersten Eingabequelle 32 zum zweiten Ausgabeziel 36. Seite acht wird auf dem zweiten Typ der "RegisterB"-Medien gedruckt. Fünftens werden die Seiten neun, zehn und elf, die gemeinsam als 96 bezeichnet sind, auf "A4"-Medien aus der zweiten Eingabequelle 33 gedruckt und zum zweiten Ausgabeziel 36 gelenkt. Sechstens wird die Eingabeseite 97 auf die zweiten "RegisterB"-Medien aus der ersten Eingabequelle 32 gedruckt und zum zweiten Ausgabeziel 36 gelenkt. Abschließend wird die dreizehnte Seite aus der ersten Eingabequelle 32 entnommen und zu einem der Ausgabeziele 35 oder 36 gelenkt.

Fig. 6C zeigt eine Tabelle eines Medienausgabemusters für den Ausgabesatz aus Fig. 6A und Fig. 6B. Die Tabelle gibt den Ausgabesatz anhand eines Seitenbezeichners, eines Druckanzeigefelds und eines Ausgabeziels zur Verarbeitung durch die CPU 17 an.

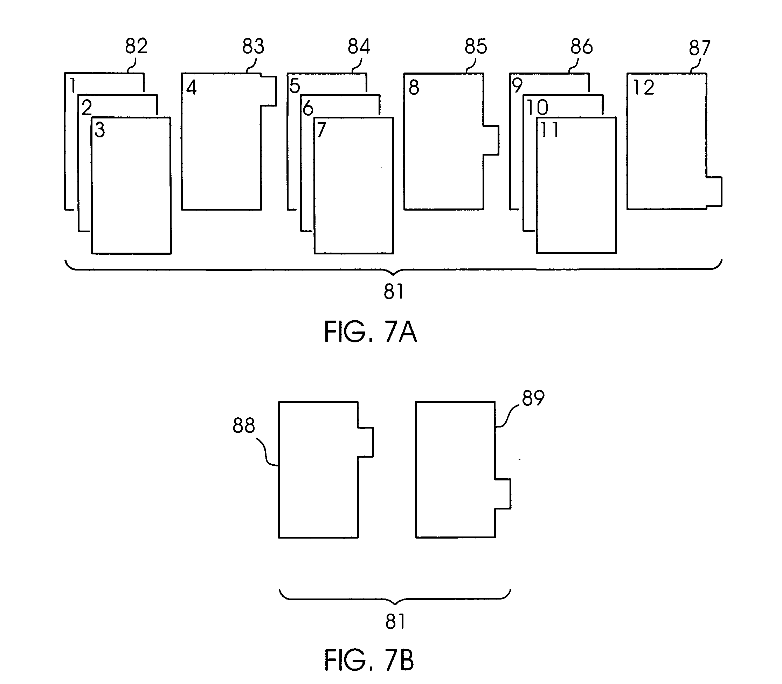

Fig. 7A und Fig. 7B zeigen ein zweites Beispiel eines Ausgabesatzes, der durch die Druckvorrichtung 26 aus Fig. 1 erstellbar ist. Der Ausgabesatz aus Fig. 7A und Fig. 7B kann aus vierzehn Eingabeseiten von den Eingabequellen 38 erzeugt werden. Für den Druckauftrag in Fig. 7A und in Fig. 7B hat hier ein Benutzer über die Benutzeroberfläche bereits das zweite Ausgabeziel 36 als "Auftragsausgabe" angegeben. Die erste Eingabequelle 32 enthält ein fünfteiliges Registermedium. Die zweite Eingabequelle 33 enthält Medien des Typs "A4", also Papier im Format 210 mm x 297 mm.

Fig. 7A und Fig. 7B zeigen gemeinsam einen Ausgabesatz 81 eines Druckauftrags. Die Seiten von Fig. 7A werden an die "<Auftragsausgabe>" gesendet, die für den Druckauftrag über die Benutzeroberfläche 13 als zweites Ausgabeziel 36 angegeben worden ist. Die Seiten aus Fig. 7A werden im zweiten Ausgabeziel 36 jeweils übereinander gestapelt. Fig. 7A stellt die Seiten nebeneinander dar, damit die "RegisterA"-Medienbogen eindeutig unterschieden werden können.

Die ersten Seiten sind die Seiten eins, zwei und drei, die gemeinsam als Gruppe 82 bezeichnet sind. Gruppe 82 wird auf "A4"-Medien gedruckt. Eingabeseite vier, die mit Bezugsziffer 83 bezeichnet ist, wird auf das erste "RegisterA"-Medium gedruckt. Die als Gruppe 84 bezeichneten Seiten fünf, sechs und sieben werden auf "A4"-Medien gedruckt. Vor Drucken der Seite acht sendet das System ein unbedrucktes "RegisterA"-Medium 88 zum ersten Ausgabeziel 35, wie in Fig. 7B dargestellt. Die mit 85 bezeichnete Eingabeseite acht wird auf das dritte "RegisterA"-Medium 85 gedruckt. Die gemeinsam mit 86 bezeichneten Eingabeseiten neun, zehn und elf werden auf "A4"-Medien gedruckt. Die mit 87 bezeichnete Eingabeseite zwölf wird auf das fünfte "RegisterA"-Medium gedruckt. Vor dem Drucken der Seite zwölf 87, sendet das System ein unbedrucktes "RegisterA"-Medium 89 zum ersten Ausgabeziel 35.

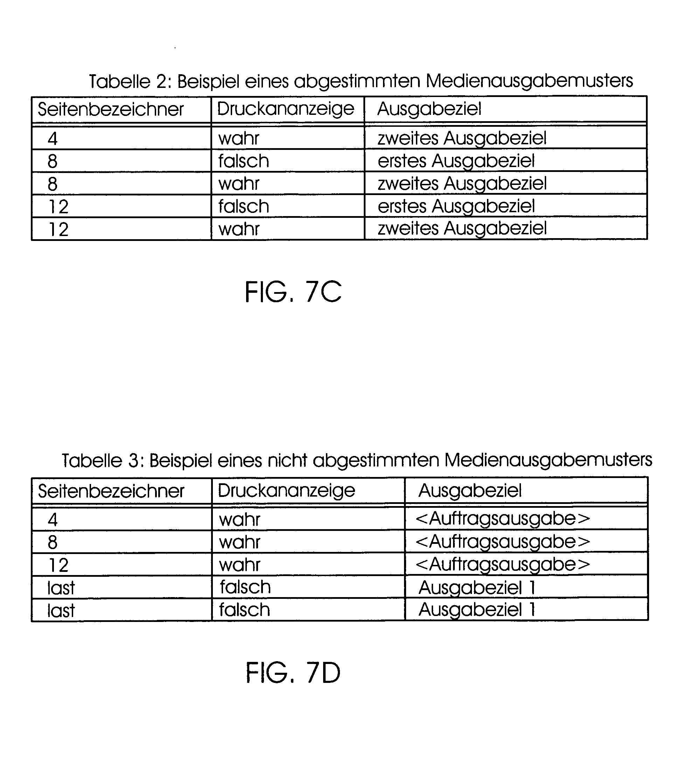

Die Druckvorrichtung 26 kann einen Seitenzuführungsbefehl für den Drucker 18 erstellen, indem sie auf ein bestimmtes, abgestimmtes Medienausgabemuster zurückgreift, das der Tabelle aus Fig. 7C entspricht. Der Benutzer aktiviert das abgestimmte Medienausgabemuster, indem er in der Seitenbezeichnerliste 103 den Bezeichner "B" einträgt, wie in Zeile 114 des Textfensters 120 in Spalte 117 aus Fig. 5D gezeigt. Der Begriff "abgestimmtes Medienausgabemuster" bezieht sich auf ein Medienausgabemuster, das Medien für einen Druckauftrag in allgemein gleicher oder gleichberechtigter Weise zwischen oder unter verschiedenen Ausgabezielen 39 verteilt.

Fig. 7D zeigt eine Tabelle eines nicht abgestimmten Medienausgabemusters. Bei diesem Beispiel wiederholen sich die Medien für jeweils zwei aufeinanderfolgende Bogen, während sich die Auftragsanforderung in der Tabelle jeweils alle vier Bogen wiederholt. In anderer Hinsicht entspricht das Medienausgabemuster aus Fig. 7D dem Medienausgabemuster aus Fig. 7C.

Wie oben bereits beschrieben, kann der Benutzer ein Medium für die zu druckenden Seiten wählen, indem er das der Medienanzeige 102 zugeordnete Pulldown-Menü aus Fig. 5 verwendet. In einer bevorzugten Ausführungsform der vorliegenden Erfindung wählt der Benutzer das Medium aus einem Papierkatalog aus. Der Papierkatalog ist eine Liste, deren Einträge dem gesamten Lagerbestand an Medien, welche dem Benutzer in der Druckerei zugänglich sind, entsprechen. Der Eintrag für ein gewähltes Medium in dem Papierkatalog umfasst einen Bezeichner für das Medium, wie z.B. einen Papiernamen und die jeweiligen Eigenschaften des Papiers. Es kann notwendig sein, dass jede Druckerei eine eigene spezifische Liste hat, die dem gesamten Lagerbestand, der in dieser Druckerei erhältlich ist, entspricht.

Ein Vorteil der Verwendung des Papierkatalogs liegt darin, dass die Attribute eines jeden Mediums in den Einträgen in dem Papierkatalog gespeichert sind und nicht jedes mal, wenn ein Medium zum Druck ausgewählt wird, eingegeben werden müssen. Bei einigen Druckvorrichtungen ist es notwendig, dass, wenn der Benutzer die Seitenbezeichnerliste 103 für jedes Medium in dem Druckauftrag erstellt, er jedes Attribut der Medien separat definieren muss, d.h. Größe, Farbe, Gewicht, Art und/oder Verwendungsart einzeln. Wenn im Gegensatz dazu die Attribute, die einem Namen für die Medien zugeordnet sind, in dem Papierkatalog vorhanden sind, muss der Benutzer nur eine einzige Auswahl aus dem Papierkatalog treffen, um die Medien zu definieren und nicht eine Auswahl für jedes einzelne Attribut der Medien treffen.

Die Druckerei ändert den Papierkatalog, wenn neue Medien dem Lagerbestand hinzugefügt werden. Üblicherweise verwendet die Druckerei ein Hilfsprogramm, um den Papierkatalog zu bearbeiten, einen Namen für die neuen Medien sowie die Attribute der neuen Medien einzugeben. Das Hilfsprogramm speichert den Eintrag für die neuen Medien in dem Papierkatalog. Wenn die Druckerei ein Medium aus dem Bestand nimmt oder ein Medium in dem Lagerbestand durch ein anderes Medium mit anderen physischen Eigenschaften ersetzt, kann das Hilfsprogramm den Eintrag für das Medium aus dem Papierkatalog löschen oder ein Dialogfenster für die Änderung der Attribute des Mediumseintrags anbieten, um die verschiedenen physischen Eigenschaften anzupassen.

In einer Ausführungsform der Erfindung zeigt die Benutzeroberfläche dem Benutzer den Papierkatalog als ein der Medienanzeige 102 zugeordnetes Pulldown-Menü an. Das Pulldown-Menü kann die Namen aller Medien in dem Papierkatalog umfassen. Wenn der Benutzer die Medien aus dem Pulldown-Menü auswählt, zeigt die Medienanzeige 102 die Namen der gewählten Medien an, und das Textfeld 104 zeigt die Attribute der gewählten Medien an, die bei der Eingabe der Medien in dem Papierkatalog gespeichert wurden.

Häufig kann der Papierkatalog Einträge für viele Mediensorten, die in der Druckerei erhältlich sind, enthalten. In einer Großdruckerei kann die Anzahl der verschiedenen erhältlichen Mediensorten über einhundert betragen. In diesem Fall wäre die Verwendung eines Pulldown-Menüs sehr mühselig. In einer weiteren Ausführungsform der Erfindung ist der Papierkatalog als ein weiterer Schirm auf der Benutzeroberfläche dargestellt.

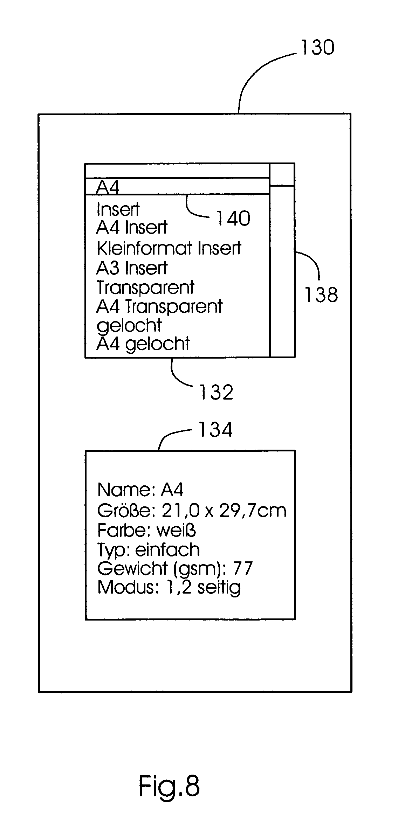

Fig. 8 ist eine beispielhafte Darstellung eines Anzeigeschirms 130, der mit einer Benutzeroberfläche 13 verbunden ist, um einen Papierkatalog erfindungsgemäß anzuzeigen. Die Benutzeroberfläche 13 kann den Papierkatalogschirm 130 auf der Druckvorrichtung 26 oder dem Fernverarbeitungssystem 20 anzeigen. Der Papierkatalogschirm 130 umfasst ein Textfenster 132, das eine Auswahl von Namen der in dem Papierkatalog gespeicherten Medien anzeigt. Das Textfenster 132 kann eine Scrollleiste 138 umfassen, mit deren Hilfe der Benutzer die Liste der Mediennamen in dem Papierkatalog "durchblättern" kann, falls die in dem Papierkatalog aufgezählten Medien so zahlreich sind, dass sie nicht gleichzeitig angezeigt werden können. Durch die Verwendung einer Tastatur oder einer Zeigeeinrichtung der Benutzeroberfläche 13 kann der Benutzer einen Medieneintrag in dem Papierkatalog wählen, indem er mit der Scrollleiste 138 so lange "blättert", bis das gewünschte Medium in dem Textfenster 132 angezeigt wird. Dann kann der Benutzer das Medium durch Betätigen einer Taste oder der Zeigeeinrichtung, wie z.B. einem einzigen Mausklick, auswählen, und der gewählte Eintrag erscheint als hervorgehobener Eintrag 140 auf der Benutzeroberfläche. Der Papierkatalogschirm 130 kann ebenso ein Textfeld 134 umfassen, dass die Attribute des hervorgehobenen Medieneintrags 140 anzeigt.

Das Anzeigen des Papierkatalogs in einem Textfenster 132 geschieht hier nur zu Illustrationszwecken. Die vorliegende Erfindung ist nicht auf die in Fig. 8 gezeigte Konfiguration beschränkt. Die Benutzeroberfläche 13 kann beispielsweise den Papierkatalog als eine Sammlung von Icons darstellen, wie sie dem Fachmann bekannt ist. Jedes Icon entspricht einem Medium in dem Papierkatalog. Die Icons können in einer erweiterbaren Baum- und Wurzelkonfiguration gruppiert sein oder von einem scrollbaren Fenster unabhängig wählbar sein, wie dem Fachmann geläufig ist.

In einer bevorzugten Ausführungsform der Erfindung kann der Benutzer durch Betätigen des hervorgehobenen Eintrags 140 in dem Papierkatalogschirm 130 anhand der Benutzeroberfläche 13, z.B. durch Doppelklicken der Maus oder Betätigen der "Enter"-Taste auf der Tastatur, die Verwendung des Papierkatalogeintrags auf Schirm 101 aus Fig. 5 aktivieren. Anstatt dem Benutzer durch die Medienanzeige 102 den kompletten Papierkatalog vorzulegen, kann die Medienanzeige 102 nur diejenigen Medien anzeigen, die aus dem Papierkatalogschirm 130 nach dem oben beschriebenen Verfahren gewählt worden sind.

Auf diese Weise kann der Benutzer einen reduzierten Papierkatalog zusammenstellen, welcher die für den Druckauftrag benötigten Medien auflistet und diejenigen Medien nicht enthält, die für den Druckauftrag nicht benötigt werden. Der reduzierte Papierkatalog ist normalerweise weniger umfassend als der komplette Papierkatalog und erleichtert das Zuordnen der Seiten des Druckauftrags zu den Medien, da das Suchen nach bestimmten Medien in dem reduzierten Papierkatalog effizienter geschieht als es in dem kompletten Papierkatalog der Fall ist.

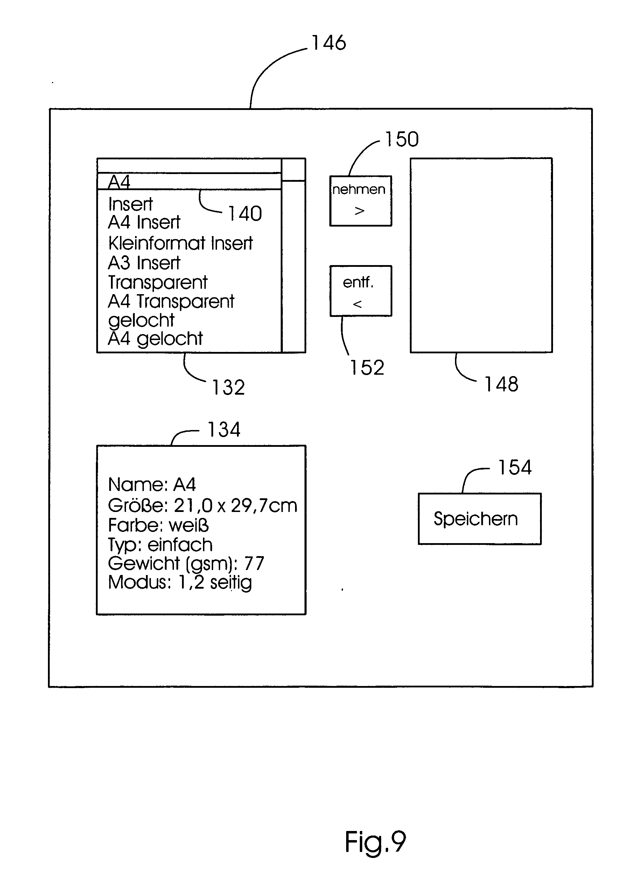

In einer weiteren bevorzugten Ausführungsform umfasst der Papierkatalogschirm ein weiteres Textfenster, das Einträge für den reduzierten Papierkatalog enthält. Fig. 9 ist eine beispielhafte Darstellung eines weiteren Anzeigeschirms 146, der mit einer Benutzeroberfläche 13 verbunden ist, um einen Papierkatalog erfindungsgemäß darzustellen. Der Papierkatalogschirm 146 umfasst ein Textfenster 132, das eine Auswahl von Namen der in dem Papierkatalog gespeicherten Medien anzeigt. Der Papierkatalogschirm 146 umfasst ebenso ein zweites Textfenster 148, das die Namen der Medien aus dem reduzierten Papierkatalog anzeigt. In der beispielhaften Darstellung aus Fig. 9 umfasst der reduzierte Papierkatalog zwei Medieneinträge, die den "RegisterB-" und "Einfügen"-Medien, sogenannten "Inserts" entsprechen.

Wenn der Benutzer einen Medieneintrag in dem Papierkatalog auswählt und den Eintrag als einen hervorgehobenen Eintrag 140 in dem Textfenster 132 für den kompletten Katalog anzeigen lässt, kann der Benutzer das gewählte Medium dem reduzierten Papierkatalog hinzufügen, indem er die "Nehmen"-Schaltfläche 150 auf der Benutzeroberfläche betätigt. Daraufhin erscheint der hervorgehobene Eintrag 140 in dem kompletten Papierkatalog auch in dem zweiten Textfenster 148 für den dem Druckauftrag zugeordneten reduzierten Papierkatalog. Ein Medium aus dem reduzierten Papierkatalog zu entfernen, umfasst die Schritte des Hervorhebens des zu entfernenden Eintrags in dem zweiten Textfenster 148 und das Betätigen der "Entfernen"-Schaltfläche 152 auf der Benutzeroberfläche 13. Auf diese Weise kann der Benutzer einen reduzierten Papierkatalog aus dem kompletten Papierkatalog erstellen.

Der Benutzer kann den reduzierten Papierkatalog speichern, indem er die "Speichern"-Schaltfläche 154 auf dem Papierkatalogschirm 146 der Benutzeroberfläche 13 betätigt. Der gespeicherte, reduzierte Papierkatalog kann dem Druckauftrag zugeordnet werden, indem ein Dateikopf für den Druckauftrag erstellt wird, der der Druckvorrichtung mitteilt, welche Medien während des Durchlaufs verwendet werden. Das Zuordnen des reduzierten Papierkatalogs zu dem Druckauftrag kann insofern hilfreich sein, als dass es den Benutzer daran erinnert, welche Medien in den Drucker 18 eingelegt werden müssen, damit der Druckauftrag ausgeführt werden kann. Durch das Abspeichern des reduzierten Papierkatalogs mit dem Druckauftrag muss der Bediener bei späteren Druckaufträgen nicht den reduzierten Papierkatalog aus dem kompletten Papierkatalog rekonstruieren.

In noch einer weiteren bevorzugten Ausführungsform kann der Benutzer, wenn er einen Medieneintrag in dem Papierkatalog auswählt und den Eintrag als einen hervorgehobenen Eintrag 140 in dem Textfenster 132 für den kompletten Papierkatalog anzeigen lässt, das gewählte Medium dem reduzierten Papierkatalog in dem zweiten Textfenster 148 hinzufügen, indem er den hervorgehobenen Eintrag 140 aus dem Textfenster 132 herüberzieht und ihn in dem zweiten Textfenster 148 anordnet ("Drag and drop"). Das Herüberziehen und Anordnen sind Vorgänge auf der Benutzeroberfläche, die anhand der dem Fachmann bekannten Zeigeeinrichtungen ausgeführt werden.

Das Anzeigen des Papierkatalogs in dem Textfenster 132 und dem zweiten Textfenster 148 dient nur der Veranschaulichung. Die vorliegende Erfindung ist nicht auf die Konfiguration in Fig. 9 beschränkt. Die Benutzeroberfläche 13 kann beispielsweise den kompletten Papierkatalog und/oder den reduzierten Papierkatalog als eine Sammlung von Icons in jeweiligen Fenstern anzeigen, wie dem Fachmann geläufig ist. Jedes Icon entspricht einem Medium in den Papierkatalogen. Die Icons können in einer erweiterbaren Baum- und Wurzelkonfiguration gruppiert oder unabhängig aus einem scrollbaren Fenster wählbar sein, wie dem Fachmann ebenfalls bekannt ist.

In einer weiteren bevorzugten Ausführungsform der Erfindung kann der Benutzer einen hervorgehobenen Eintrag für ein Medium aus einem Textfenster 132, das den Papierkatalog auf Schirmen, wie sie in Fig. 8 oder Fig. 9 dargestellt sind, enthält, herüberziehen und den herübergezogenen Eintrag auf einem Schirm 101, wie er in Fig. 5 dargestellt ist, anordnen. Durch das Anordnen des hervorgehobenen Eintrags auf dem Schirm 101 kann ein Eintrag des Mediums in einem der Medienanzeige 102 zugeordneten Pulldown-Menü zur Verfügung gestellt werden.

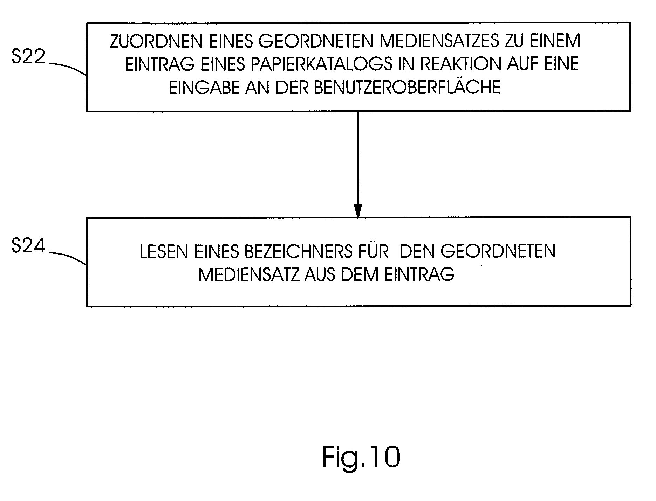

Fig. 10 ist ein Ablaufdiagramm für ein bevorzugtes Verfahren zur Ermittlung einer Anzahl von sequentiell geordneten Seiten in einem geordneten Mediensatz gemäß der vorliegenden Erfindung. In Schritt 22 ordnet die Druckvorrichtung 26 dem geordneten Mediensatz in Reaktion auf eine Eingabe an der Benutzeroberfläche 13 einen Papierkatalog zu. Wie oben bereits beschrieben, kann der Benutzer die Zeigeeinrichtung der Benuteroberfläche 13 betätigen, um den Namen der geordneten Medien in dem Textfenster 132 des Papierkatalogschirms 130, 146 auszuwählen. In Reaktion darauf holt die Druckvorrichtung 26 den dem Namen des geordneten Mediums zugeordneten Eintrag aus einem Speicher.

In Schritt S24 liest die Druckvorrichtung 26 einen Bezeichner für den geordneten Mediensatz aus dem Eintrag. Der Bezeichner kann eine Zeichenkette oder eine Zahl sein, die dem Eintrag zugeordnet sind und die Anzahl der sequentiell geordneten Seiten in dem geordneten Mediensatz beinhalten. In einer bevorzugten Ausführungsform ist der Bezeichner ein alphanumerischer Name der geordneten Medien, der ein "Ankerzeichen" beinhaltet. Das Ankerzeichen zeigt der Druckvorrichtung 26 an, dass der alphanumerische Name die Anzahl von Bogen oder Seiten in dem geordneten Mediensatz beinhaltet. Der Name der geordneten Medien, der in dem Textfenster 132 für den Papierkatalog oder dem zweiten Textfenster 148 für den reduzierten Papierkatalog erscheint, kann beispielsweise folgende Form haben: "RegisterA#[5]". Dies ist die Form des Namens der Medien, wie sie in dem Eintrag für die Medien in dem Papierkatalog erscheint und von der Benutzeroberfläche 13 zur Ansicht durch den Benutzer angezeigt wird. Die Rautetaste (#) dient als ein Ankerzeichen. Die Druckvorrichtung 26 liest den Eintrag für die Medien, wenn sie den Papierkatalog in den Speicher lädt und stellt fest, dass der Name der Medien das Ankerzeichen enthält. Software auf der Druckvorrichtung 26 entnimmt die Anzahl der Seiten oder Bogen der geordneten Medien der Zahl in einer bestimmten Position im Verhältnis zu dem Ankerzeichen. Im Falle der geordneten Medien aus Fig. 7 entnimmt die Druckvorrichtung 26 die Anzahl einer Position, die in der zweiten Zeichenposition nach dem Ankerzeichen angeordnet ist, d.h. dass fünf Register in dem geordneten Mediensatz für "RegisterA" vorhanden sind.

Auf diese Weise kann die Druckvorrichtung 26 einen Wert für eine Anzahl der sequentiell geordneten Seiten in dem geordneten Mediensatz ermitteln und den Wert dazu benutzen zu berechnen, wie viele Seiten verwendet und wie viele Seiten während des Druckauftrags entsorgt werden. Die Druckvorrichtung 26 kann die geordneten Medien in dem Druckauftrag auf diese Weise verwalten und die Staubeseitigung für die geordneten Medien handhaben.

Es sei darauf hingewiesen, dass die oben angeführte Form des Bezeichners nur Illustrationszwecken dient, und die Erfindung nicht auf die Verwendung eines Ankerzeichens, eines Rautenelements oder das Beinhalten der Anzahl der sequentiell geordneten Seiten in dem Namen für die geordneten Medien beschränkt ist. Die Anzahl der sequentiell geordneten Seiten kann auch an einem anderen Ort in dem Papierkatalogeintrag für die geordneten Medien beinhaltet sein, z.B. bei den anderen Attributen der geordneten Medien.

Darüber hinaus kann der Benutzer einen benutzerdefinierten Namen für die geordneten Medien angeben. Der Benutzer möchte beispielsweise die geordneten "RegisterB"-Medien, die in Fig. 6 zwei Register enthalten, in "Binär" umbenennen, um die Seiten eines Dokuments in zwei Sätze aufzuteilen: ein Satz, dem ein oberes Register nachgeordnet ist, und ein weiterer Satz, dem ein unteres Register nachgeordnet ist. Durch eine Eingabe des Benutzers an der Benutzeroberfläche 13 liest die Druckvorrichtung 26 den benutzerdefinierten Namen, der anhand der Tastatur eingegeben wird. Die Druckvorrichtung 26 ordnet dem benutzerdefinierten Namen den Bezeichner für die geordneten Medien zu. Durch Auswählen der geordneten Medien aus dem kompletten Papierkatalog, der in dem Textfenster 132 für den Papierkatalogschirm angezeigt wird, kann der Benutzer z.B. den hervorgehobenen Eintrag 140 herüberziehen und in dem zweiten Textfenster 148 für den reduzierten Papierkatalog anordnen oder den hervorgehobenen Eintrag 140 herüberziehen und auf dem Schirm 101 zum Definieren der Merkmale des Druckauftrags anordnen. Die Benutzeroberfläche 13 kann notwendig machen, dass der Benutzer den benutzerdefinierten Namen anhand der Tastatur eingibt. Alternativ dazu kann der Benutzer die Zeigeeinrichtung betätigen oder eine speziell zugeordnete Taste auf der Tastatur betätigen, damit die Benutzeroberfläche 13 einen benutzerdefinierten Namen anfordert. Der benutzerdefinierte Name ersetzt normalerweise nicht den Namen der Medien in dem Papierkatalog, sondern liefert einen Namen, der dem Benutzer nur innerhalb dieses Druckauftrags oder reduzierten Papierkatalogs angezeigt wird.

### Liste der Bezugszeichen

- 10: Kommunikationsnetz
- 11: Computer
- 12: Scanner
- 13: Benutzeroberfläche
- 17: CPU (zentrale Verarbeitungseinheit)
- 18: Drucker
- 19: Dokumenterstellungssystem
- 20: Fernverarbeitungssystem
- 22: Anzeige
- 24: lokales Verarbeitungssystem
- 26: Druckvorrichtung
- 32: erste Eingabequelle
- 33: zweite Eingabequelle
- 34: dritte Eingabequelle
- 35: erstes Ausgabeziel
- 36: zweites Ausgabeziel
- 37: drittes Ausgabeziel
- 38: Eingabequellen
- 39: Ausgabeziele
- 51: erste Gruppe
- 52: erste Seite
- 53: zweite Seite
- 54: dritte Seite
- 55: vierte Seite
- 56: fünfte Seite
- 61: zweite Gruppe
- 62: rote Seite
- 63: blaue Seite
- 64: grüne Seite
- 71: dritte Gruppe
- 72: erste Seite
- 73: zweite Seite
- 74: Registerpositionen
- 81: Ausgabesatz
- 82, 83, 84, 85, 86, 87: Gruppen von Seiten
- 88: "RegisterA"-Medium
- 89: "RegisterA"-Medium
- 91: Ausgabesatz
- 92, 93, 94, 95, 96, 97: Gruppen von Seiten
- 101: Schirm
- 102: Medienanzeige
- 103: Seitenbezeichnerliste
- 104: Textfeld
- 105: Ausnahmebetrieb
- 106: Ausgabezielanzeige
- 107: Bearbeitungsanzeige
- 108-115: Zeilen
- 116: linke Spalte
- 117: erste Zwischenspalte
- 118: zweite Zwischenspalte
- 119: rechte Spalte
- 120: Textfenster
- 130: Papierkatalogschirm
- 132: Textfenster
- 134: Textfeld
- 138: Scrollleiste
- 140: hervorgehobener Eintrag
- 146: Papierkatalogschirm
- 148: zweites Textfenster
- 150: "Nehmen"-Schaltfläche
- 152: "Entfernen"-Schaltfläche
- 154: "Speichern"-Schaltfläche

- S10: Verfahrensschritt
- S12: Verfahrensschritt
- S14: Verfahrensschritt
- S16: Verfahrensschritt
- S18: Verfahrensschritt
- S22: Verfahrensschritt
- S24: Verfahrensschritt

## Patentansprüche

1. Verfahren zum Ermitteln einer Anzahl sequentiell geordneter Seiten in einem geordneten Mediensatz mit den folgenden Verfahrensschritten:
Zuordnen des geordneten Mediensatzes zu einem Eintrag in einem Papierkatalog in Reaktion auf eine Eingabe an der Benutzeroberfläche (13), und
Lesen eines Bezeichners für den geordneten Mediensatz aus dem Eintrag,
**dadurch gekennzeichnet,**
**dass** der Bezeichner die Anzahl der sequentiell geordneten Seiten in dem geordneten Mediensatz umfasst.

2. Computerlesbares Medium mit darin gespeicherten Anweisungen zum Veranlassen einer zentralen Verarbeitungseinheit (17), das Verfahren nach Anspruch 1 auszuführen.

3. Verfahren nach Anspruch 1 mit folgendem weiteren Verfahrensschritt:
Konfigurieren einer Druckvorrichtung (26) zum Senden einer ersten Auswahl von sequentiell geordneten Seiten an eine erste Auftragsausgabe (35) und einer zweiten Auswahl von sequentiell geordneten Seiten an eine zweite Auftragsausgabe (36).

4. Verfahren nach Anspruch 3,
**dadurch gekennzeichnet,**
**dass** der Konfigurationsschritt den folgenden Verfahrensschritt umfasst:
Berechnen einer zweiten Anzahl von Seiten in der zweiten Auswahl durch Abziehen einer ersten Anzahl von Seiten in der ersten Auswahl von der Anzahl der sequentiell geordneten Seiten in dem geordneten Mediensatz.

5. Verfahren nach Anspruch 1 mit den folgenden weiteren Verfahrensschritten:
Lesen eines benutzerdefinierten Namens für den geordneten Mediensatz aus der Oberfläche (13), und
Zuordnen des benutzerdefinierten Namens zu dem Bezeichner.

6. Verfahren nach Anspruch 1 mit dem folgenden weiteren Verfahrensschritt:
Konfigurieren einer Druckvorrichtung (26) zum Senden einer dritten Auswahl von sequentiell geordneten Seiten an eine dritte Auftragsausgabe (37) als Teil einer Staubeseitung.
